# EUROPÄISCHE PATENTSCHRIFT

(11) **EP 1 735 541 B1**
(45) Veröffentlichungstag und Bekanntmachung des Hinweises auf die Patenterteilung: **01.06.2011**
(21) Anmeldenummer: 05733675.2
(22) Anmeldetag: 24.03.2005
(51) Int. Cl.: F16D 55/00

(54) **BREMSVORRICHTUNG**
BRAKE MECHANISM
SYSTEME DE FREINAGE

(30) Priorität: 01.04.2004 DE 102004016826
(43) Veröffentlichungstag der Anmeldung: 27.12.2006
(73) Patentinhaber: KNORR-BREMSE Systeme für Nutzfahrzeuge GmbH, 80809 München (DE); Daimler AG, 70327 Stuttgart (DE)
(72) Erfinder: BAUMGARTNER, Johann, 85368 Moosburg (DE); SAGERER, Stefan, 85406 Oberappersdorf bei Zolling (DE); MAUZ, Uwe, 73730 Esslingen (DE)
(74) Vertreter: Mattusch, Gundula
(86) Internationale Anmeldenummer: PCT/EP2005/003155
(87) Internationale Veröffentlichungsnummer: WO 2005/095815

(56) Entgegenhaltungen:
- DE-U1- 20 021 587
- FR-A- 1 313 957
- US-A- 3 999 635
- PATENT ABSTRACTS OF JAPAN Bd. 2002, Nr. 02, 2. April 2002 (2002-04-02) & JP 2001 271857 A (NISSIN KOGYO CO LTD), 5. Oktober 2001 (2001-10-05)
- PATENT ABSTRACTS OF JAPAN Bd. 1995, Nr. 04, 31. Mai 1995 (1995-05-31) & JP 07 012148 A (NISSIN KOGYO KK), 17. Januar 1995 (1995-01-17)

## Beschreibung

Die vorliegende Erfindung betrifft eine Bremsvorrichtung gemäß dem Oberbegriff des Anspruchs 1.

Vorzugsweise druckluftbetätigte Scheibenbremsen, insbesondere für Nutzfährzeuge werden jeweils an einem fest mit der Radachse verbundenen Anschlusskörper dadurch befestigt, dass ein Befestigungsflansch des Bremssattels oder eines Bremsträgers der Scheibenbremse mit dem Anschlusskörper verschraubt wird.

Eine Art der Befestigung ist beispielsweise in der EP 0 849 486 A2 gezeigt und beschrieben. Dabei liegen der Anschlusskörper und der Befestigungsflansch des Bremssattels flächig, also sozusagen überlappend, aneinander und sind durch in Achsrichtung der Radachse sich erstreckende Schrauben miteinander verschraubt.

Zwar wird hierdurch eine gute Positionierung des Bremssattels erreicht, jedoch birgt die ausschließlich kraftschlüssige Verbindung einige Nachteile in sich, die einem dauerhaft optimalen Betrieb der Scheibenbremse entgegenstehen.

Beim Bremsvorgang wird durch die aufgebrachte Bremskraft bzw. durch die auf eine Bremsscheibe einwirkende Reibkräfte ein Drehmoment wirksam, das von den Schraubverbindungen aufgenommen werden muss, die jeweils aus einer Durchgangsbohrung, einer Gewindebohrung sowie einer Schraube bestehen, wobei die Durchgangsbohrung im Anschlusskörpers oder Befestigungsflansch vorgesehen sein kann und die Gewindebohrung in dem anderen zugeordneten Bauteil.

Zur Durchführung der Schraube muss der Durchmesser der Durchgangsbohrung größer sein als der Schaftdurchmesser der Schraube. Dies führt insbesondere bei hohen Bremsmomenten, die durch den Kraftschluss nicht übertragen werden zu einer Relativbewegung des die Durchgangsbohrung aufweisenden Bauteils gegenüber dem anderen, bis die Leibung des der Durchgangsbohrung am Schraubenschaft zur Anlage kommt. Hierdurch werden die Schrauben in erheblichem Maße auf Abscheren beansprucht, was eine entsprechende Querschnittsdimensionierung erforderlich macht, die einer kostengünstigen Montage sowie einer gewichtsoptimierten Bauweise entgegensteht.

Problematisch ist auch, dass diese Art der Verbindung eine relativ große Anzahl von Verbindungsschrauben erfordert, was große Auflageflächen des Anschlusskörpers und des Befestigungsflansches bedingt.

Durch die genannte Relativverschiebung der miteinander verbundenen Bauteile beim Bremsen kann sich bei einer Schiebesattelbremse die Schiebeführung des Bremssattels verspannen, was dauerhaft zu Beschädigungen der Führungsteile führt. Überdies kann im Falle des Reversierbetriebes die häufige Hin- und Herverschiebung der Bauteile zu einem Lösen der Schrauben führen, wodurch die Betriebssicherheit insgesamt beeinträchtigt werden kann.

Ein weiterer Nachteil der bekannten Befestigungsart ist die schlechte Zugänglichkeit zu den Schrauben, da die Verschraubung von der Fahrzeuginnenseite aus erfolgen muss, die Montage bzw. Demontage der Bremse erschwert ist.

In der US 3 999 635 A ist eine Bremsvorrichtung gemäß dem Oberbegriff des Anspruchs 1 gezeigt und beschrieben, bei der der Befestigungsflansch mittels Schenkeln außenseitig am Anschlusskörper anliegt und durch Schrauben gehalten wird.

Aus der DE 200 21 587 U1 ist es bekannt, die Schrauben nicht koaxial zur Bremsscheibenrotationsachse anzuordnen, sondern tangential dazu. Diese Konstruktion ermöglicht zwar eine verbesserte Zugänglichkeit zu den Schrauben bei der Montage sowie eine Reduzierung des Bremsengewichts durch die möglichen kleineren Anlageflächen des Anschlusskörpers und des Befestigungsflansches, jedoch ist die relative Verschiebbarkeit der beiden Bauteile zueinander bei der Übertragung der Bremsmomente auf die Achse weiterhin gegeben, mit den geschilderten Nachteilen.

Der vorliegenden Erfindung liegt daher die Aufgabe zugrunde, eine Bremsvorrichtung der gattungsgemäßen Art so weiter zu entwickeln, dass sie kostengünstiger herstell- und montier- bzw. demontierbar ist, eine Gewichtsreduzierung der Bremse insgesamt erreicht und die Betriebssicherheit verbessert wird.

Diese Aufgabe wird durch eine Bremsvorrichtung gelöst, welche die Merkmale des Anspruchs 1 aufweist.

Durch diese konstruktive Ausbildung erfolgt nun eine Bremsmoment-Aufnahme durch Formschluss und nicht wie im Stand der Technik durch Kraftschluss. Ein relatives Verschieben des Befestigungsflansches zum Anschlusskörper ist damit ausgeschlossen.

Hierdurch ergibt sich zunächst eine Verbesserung der Betriebssicherheit, da beispielsweise bei einer Schiebesattelbremse die Führungsteile nicht mehr gegeneinander verspannen können und bei reversierendem Betrieb ein Lösen von Verbindungsschrauben ausgeschlossen ist.

Die Anlageflächen der beiden Bauteile können, da sie nicht mehr der Schraubenaufnahme dienen, sondern ausschließlich dem Formschluss, relativ klein gehalten sein, was zu einer Gewichtseinsparung und zu einer Fertigungsoptimierung beiträgt. Dies gilt gleichermaßen für die nun mögliche reduzierte Anzahl der Verbindungsschrauben, da diese praktisch nur noch dazu dienen, die beiden Bauteile aneinander zu halten.

Die damit einhergehende Reduzierung des Platzbedarfs ermöglicht eine wesentlich bessere Zugänglichkeit zu den Schrauben, so dass die Montage bzw. Demontage der Bremse wesentlich einfacher möglich ist.

Nach einer vorteilhaften Weiterbildung der Erfindung ist vorgesehen, dass die Anlageflächen des Befestigungsflansches einerseits und des Anschlusskörpers andererseits zur Mitte der Radachse hin schräg ausgerichtet verlaufen, so dass die jeweiligen beiden Anlageflächen V-förmig zueinander stehen. Dabei bildet der Befestigungsflansch praktisch einen Keil, der sich seitlich am Anschlusskörpers abstützt.

Diese V-Form ermöglicht bei der Bremsenmontage eine einfache, weil vorgegebene Positionierung, was gleichfalls die Montage erleichtert.

Weitere vorteilhafte Ausbildungen der Erfindung sind in den Unteransprüchen gekennzeichnet.

Ein Ausführungsbeispiel der Erfindung wird nachfolgend anhand der beigefügten. Zeichnung beschrieben.

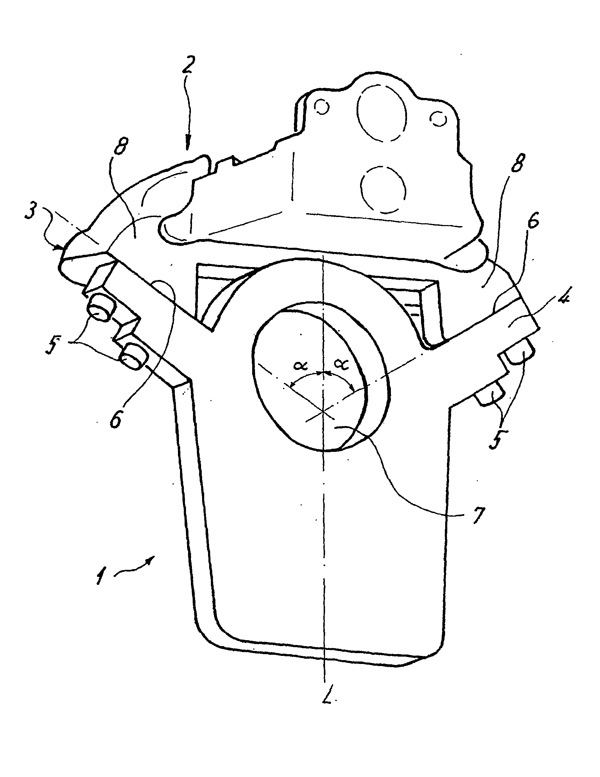

Die einzige Figur zeigt eine erfindungsgemäße Bremsvorrichtung in einer perspektivischen Darstellung.

In der Figur ist eine Bremsvorrichtung dargestellt, die in ihrem Grundaufbau aus einem Anschlusskörper 1, einem Befestigungsflansch 3 und einem damit hier einstückig ausgebildeten Bremssattel 2 besteht.

Der Anschlusskörper 1 ist an einer nicht dargestellten Radachse befestigt, beispielsweise durch Verschweißen, wozu der Anschlusskörper 1 eine Steckbohrung 7 aufweist, zur Aufnahme der Radachse. In einer Ausführungsvariante kann der Anschlusskörper 1 mit dem Achskörper einteilig als Gussteil oder Schmiedeteil ausgeführt sein.

Insgesamt ist der Anschlusskörper 1 plattenförmig und hier spiegelsymmetrisch ausgebildet. Beidseitig sind Anschlussschenkel 4 angeformt, die V-förmig zueinander stehen und Anlageflächen 6 aufweisen, an denen Befestigungsschenkel 8 des Befestigungsflansches 3 anliegen. Demzufolge bilden die Befestigungsschenkel 8 gemeinsam ebenfalls eine V-Form, bezogen auf die den Anlagenflächen 6 zugewandten Flächen. Das V hat einen Öffnungswinkel a zur Mittellängsachse L des Anschlusskörpers. Die Mittellängsachse L verläuft durch die Spitze des V.

Prinzipiell ist jeder Winkel < 90 ° denkbar, unter dem die jeweilige Anlagefläche 6 zur Mittellängsachse des Anschlusskörpers 1 ausgerichtet ist. Vorzugsweise stehen die Anlagenflächen 6 jeweils unter einem Winkel 2α von 10 bis 80° zueinander, vorzugsweise 30 bis 60 °, insbesondere etwa 55°, ganz besonders bevorzugt 58°, da sich unter diesen Winkeln jeweils überraschend nochmals verbesserte Ergebnisse erzielen lassen.

Die Befestigungsschenkel 8 und damit der Bremssattel 2 sind durch Verbindungsschrauben 5, die sich vorzugsweise tangential zur Radachse bzw. zur Versteckbohrung 7 erstrecken, mit dem Anschlusskörper 1 verbunden, wobei sich die Köpfe der Verbindungsschrauben 5 an parallel zu der jeweiligen Anlagefläche 6 verlaufenden Stützflächen der Anschlussschenkel 4 abstützen.

Wie deutlich erkennbar ist, bilden die Anschlussschenkel 4 ein Widerlager zur Aufnahme von auftretenden Bremsmomenten, die in Umfangsrichtung der Steckbohrung 7 bzw. der nicht dargestellten Radachse wirksam sind. Eine Scherbelastung der Verbindungsschrauben 5 ist dabei ausgeschlossen.

### Bezugszeichenliste

- 1: Anschlusskörpers
- 2: Bremssattel
- 3: Befestigungsflansch
- 4: Anschlussschenkel
- 5: Verbindungsschraube
- 6: Anlagefläche
- 7: Steckbohrung
- 8: Befestigungsschenkel

## Patentansprüche

1. Bremsvorrichtung, mit einem an einer Radachse eines Kraftfahrzeugs, insbesondere eines Nutzfahrzeuges befestigten Anschlusskörper (1) und einem Befestigungsflansch (3) eines Bremssattels (2) oder eines Bremsträgers einer Scheibenbremse, wobei der Befestigungsflansch (3) am Anschlusskörper (1) befestigt ist, **dadurch gekennzeichnet, dass** der Befestigungsflansch (3) in Umfangsrichtung der Radachse formschlüssig am Anschlusskörper (1) gehalten ist, wozu der keilförmig gestaltete Befestigungsflansch (3) und der Anschlusskörper (1) jeweils aneinander liegende Anlageflächen (6) aufweisen, die jeweils spitzwinklig in einem Winkel von < 90° zur Mittellängsachse (L) des Anschlusskörpers (1) verlaufen.

2. Bremsvorrichtung nach Anspruch 1, **dadurch gekennzeichnet, dass** die Anlageflächen (6) V-förmig zueinander verlaufend angeordnet sind.

3. Bremsvorrichtung nach Anspruch 1 oder 2, **dadurch gekennzeichnet, dass** die Anlageflächen (6) spiegelsymmetrisch zur Mittellängsachse (L) des Anschlusskörpers (1) zueinander angeordnet sind.

4. Bremsvorrichtung nach einem der vorhergehenden Ansprüche, **dadurch gekennzeichnet, dass** der Anschlusskörper (1) zwei Anschlussschenkel (4) aufweist, deren dem Befestigungsflansch (3) zugewandte Seiten jeweils die Anlagefläche (6) bilden.

5. Bremsvorrichtung nach Anspruch 4, **dadurch gekennzeichnet, dass** jeder Anschlussschenkel (4) parallel zur zugeordneten Anlagefläche (6) verlaufende Stützflächen aufweist, an denen sich Köpfe von Verbindungsschrauben (5) abstützen, die in den Befestigungsflansch (3) eingeschraubt sind.

6. Bremsvorrichtung nach Anspruch 5, **dadurch gekennzeichnet, dass** die Verbindungsschrauben (5) tangential zur Radachse verlaufend angeordnet sind.

7. Bremsvorrichtung nach einem der vorhergehenden Ansprüche, **dadurch gekennzeichnet, dass** der Befestigungsflansch (3) mit zwei Befestigungsschenkeln (8) versehen ist, von denen jeder einem Anschlussschenkel (4) des Anschlusskörpers (1) zugeordnet ist und an der Anlagefläche (6) anliegt.

8. Bremsvorrichtung nach Anspruch 7, **dadurch gekennzeichnet, dass** jeder Befestigungsschenkel (8) flächig an der Anlagefläche (6) des zugeordneten Anschlussschenkels (4) anlegt.

9. Bremsvorrichtung nach einem der vorhergehenden Ansprüche, **dadurch gekennzeichnet, dass** die Anlageflächen (6) einen Winkel α zwischen 20 und 70°, vorzugsweise 30 ° bis 60 ° zur Mittellängsachse (L) einschließen.

10. Bremsvorrichtung nach Anspruch 9, **dadurch gekennzeichnet, dass** die Anlageflächen (6) einen Winkel 2α von etwa 55 °, insbesondere 58° zur Mittellängsachse (L), einschließen.

11. Bremsvorrichtung nach einem der vorhergehenden Ansprüche, **dadurch gekennzeichnet, dass** der Anschlusskörper (1) mit der Radachse bzw. mit einem Achskörper einteilig als Gussteil ausgebildet ist.

## Claims

1. A brake mechanism, having a connecting element (1) which is fastened to a wheel axle of a motor vehicle, in particular a utility vehicle and a fastening flange (3) of a brake caliper (2) or a brake carrier of a disc brake, wherein the fastening flange (3) is fastened to the connecting element (1), **characterised in that** the fastening flange (3) is held in a form-fitting manner on the connecting element (1) in the circumferential direction of the wheel axle, for which the fastening flange (3) designed as a wedge and the connecting body (1) respectively have contact faces which bear against one another, which respectively extend at an acute angle α of < 90° with respect to the centre longitudinal axis (L) of the connecting element (1).

2. The brake mechanism as claimed in claim 1, **characterised in that** the contact faces (6) are arranged so as to extend in a V shape with respect to one another.

3. The brake mechanism as claimed in claim 1 or 2, **characterised in that** the contact faces (6) are arranged in a mirror-symmetrical manner about the centre longitudinal axis (L) of the connecting element (1) with respect to one another.

4. The brake mechanism as claimed in one of the preceding claims, **characterised in that** the connecting element (1) has two connecting limbs (4), the sides of which facing the fastening flange (3) respectively form the contact face (6).

5. The brake mechanism as claimed in claim 4, **characterised in that** each connecting limb (4) has supporting faces which extend parallel with respect to the associated contact face (6), on which are supported heads of connection screws (5), which are screwed into the fastening flange (3).

6. The brake mechanism as claimed in one of the preceding claims, **characterised in that** the connection screws (5) are arranged so as to extend tangentially with respect to the wheel axle.

7. The brake mechanism as claimed in one of the preceding claims, **characterised in that** the fastening flange (3) is provided with two fastening limbs (8), of which each is assigned to a connecting limb (4) of the connecting element (1) and bears against the contact face (6).

8. The brake mechanism as claimed in claim 7, **characterised in that** each fastening limb (8) bears over its full surface area against the contact face (6) of the associated connecting limb (4).

9. The brake mechanism as claimed in one of the preceding claims, **characterised in that** the contact faces (6) enclose an angle α between 20 and 70°, preferably 30° to 60° to the centre longitudinal axis (L).

10. The brake mechanism as claimed in claim 9, **characterised in that** the contact faces (6) enclose an angle 2α of approximately 55°, in particular 58° to the centre longitudinal axis (L).

11. The brake mechanism as claimed in one of the preceding claims, **characterised in that** the connecting element (1) is formed in one piece as a cast part with the wheel axle or with an axle element.

## Revendications

1. Dispositif de freinage, comprenant un corps (1) de raccordement, fixé à un essieu d'un véhicule automobile, notamment d'un véhicule utilitaire, et une bride (3) de fixation d'un étrier (2) de frein ou d'un support d'un frein à disque, la bride (3) de fixation étant fixée au corps (1) de raccordement, **caractérisé en ce que** la bride (3) de fixation est maintenue dans la direction périphérique de l'essieu à complémentarité de forme sur le corps (1) de raccordement, la bride (3) de fixation cunéiforme et le corps (1) de raccordement ayant à cet effet respectivement des surfaces (6) d'application l'une sur l'autre, qui font respectivement un angle aigu inférieur à 90° avec l'axe (L) longitudinal médian du corps (1) de raccordement.

2. Dispositif de freinage suivant la revendication 1, **caractérisé en ce que** les surfaces (6) d'applications s'étendent l'une par rapport à l'autre en forme de V.

3. Dispositif de freinage suivant la revendication 1 ou 2, **caractérisé en ce que** les surfaces (6) d'application sont symétriques comme en un miroir par rapport à l'axe (L) longitudinal médian du corps (1) de raccordement.

4. Dispositif de freinage suivant l'une des revendications précédentes, **caractérisé en ce que** le corps (1) de raccordement a deux branches (4) de raccordement, dont les côtés tournés vers la bride (3) de fixation forment respectivement les surfaces (6) d'application.

5. Dispositif de freinage suivant la revendication 4, **caractérisé en ce que** chaque branche (4) de raccordement a des surfaces d'appui, qui s'étendent parallèlement à la surface (6) d'application associée, et sur lesquelles s'appuient des têtes de vis (5) d'assemblage, qui sont vissées dans la bride (3) de fixation.

6. Dispositif de freinage suivant la revendication 5, **caractérisé en ce que** les vis (5) d'assemblage s'étendent tangentiellement à l'essieu.

7. Dispositif de freinage suivant l'une des revendications précédentes, **caractérisé en ce que** la bride (3) de fixation est pourvue de deux branches (8) de fixation, dont chacune est associée à une branche (4) de raccordement du corps (1) de raccordement et s'applique à la surface (6) d'application.

8. Dispositif de freinage suivant la revendication 7, **caractérisé en ce que** chaque branche (8) de fixation s'applique à plat à la surface (6) d'application de la branche (4) de raccordement associé.

9. Dispositif de freinage suivant l'une des revendications précédentes, **caractérisé en ce que** les surfaces (6) d'application font un angle α compris entre 20 et 70°, allant de préférence de 30° à 60°, avec l'axe (L) longitudinal médian.

10. Dispositif de freinage suivant la revendication 9, **caractérisé en ce que** les surfaces (6) d'application font un angle α d'environ 55°, notamment de 58° avec l'axe (L) longitudinal médian.

11. Dispositif de freinage suivant l'une des revendications précédentes, **caractérisé en ce que** le corps (1) de raccordement est constitué avec l'essieu ou avec un corps d'essieu en une seule pièce, sous la forme d'une pièce coulée.
